# EUROPEAN PATENT SPECIFICATION

(11) **EP 1 781 007 B1**
(45) Date of publication and mention of the grant of the patent: **01.12.2010**
(21) Application number: 06022641.2
(22) Date of filing: 30.10.2006
(51) Int. Cl.: H04N 1/04

(54) **Image reader and image forming device**
Bildleser und Bilderzeugungsvorrichtung
Lecteur d'image et dispositif de formation d'image

(30) Priority: 31.10.2005 JP 2005317046
(43) Date of publication of application: 02.05.2007
(73) Proprietor: Brother Kogyo Kabushiki Kaisha, Nagoya-shi, Aichi-ken (JP)
(72) Inventor: Kawai, Takamitsu, c/o Intellectual Prop. Dept.,, Mizuho-ku, Nagoya-shi, Aichi-ken (JP); Bandai, Yasuhito, c/o Intellectual Prop. Dept.,, Mizuho-ku, Nagoya-shi, Aichi-ken (JP)
(74) Representative: Kuhnen & Wacker

(56) References cited:
- EP-A- 1 309 168
- JP-A- 2000 050 025
- US-A- 5 734 483

## Description

### TECHNICAL FIELD

The present invention relates to an image reading device capable of performing a document-feed reading operation for reading an image of a document while feeding the document and a document-fixed reading operation for reading an image of a document fixedly placed on a predetermined region of a flat bed unit and an image forming device having the image reading device.

### BACKGROUND

From JP 2000-050025 A there is known an image reader according to the preamble of claim 1.

A conventional image reading device have been provided with a transparent board, an image reading unit, a document conveying unit, and a document pick-up member. The transparent board has a document-feed reading region on which a document is conveyed and a document-fixed reading region on which the document is fixedly placed. The image reading unit is disposed blow the transparent board and selectively performs a document-feed reading operation for reading an image of the document conveyed on the document-feed reading region and a document-fixed reading operation for reading the image of the document placed on the document-fixed reading region. The document conveying unit conveys the document on the document-feed reading region in a document conveying direction from document-feed reading region to the document-fixed reading region. The document pick-up member is provided between the document-feed reading region and the document-fixed reading region. The document conveyed on the document-feed reading region contacts the document pick-up member and picked up by the document pick-up member. This type of image reading device can convey the document on the document-feed reading region of the transparent board by the document conveying unit and perform the document-feed reading operation for reading the image of the conveyed document or perform the document-fixed reading operation for reading the image of the document fixedly placed the document on the document-fixed reading region of the transparent board based on the user's request. In performing the document-feed reading operation, this type of image reading device conveys the document on the document-feed reading region in the document conveying direction by the document conveying unit. Then, the document is picked up by the document pick-up member and stacked on a upper side of the document-fixed reading region.

Here, the document pick-up member needs to be provided on the transparent board so as not to interfere conveyance of the document by the document conveying unit. Therefore, it is considered that the transparent board is divided into the document-feed reading region and the document-fixed reading region and a lower end portion, having a wedge-shaped cross section, of the document pick-up member is interposed between the document-feed reading region and the document-fixed reading region. Thus, the document conveyed on the transparent board is well picked up by an upper surface of the document pick-up member without being caught on the lower end portion of the document pick-up member.

However, when the transparent board is divided into two parts as described above, the document-feed reading region is supported by only three edges except an edge on which the document pick-up member is provided, thereby reducing strength of the document-feed reading region. That is, since the image reading unit such as a CIS needs to move lower portions of the document-feed reading region and the document-fixed reading member of the transparent board, the document-fixed reading member, having so large as to place all of predetermined size documents thereon, of the transparent board is supported only by the above-mentioned three edges. Accordingly, when the document such as a book is pressed against the document-fixed reading member, the document-fixed reading region of the transparent board may be bent downward, thereby interfering movement of the image reading unit. Japanese Patent Application Publication No. 2000-50025 discloses that the transparent board is formed with a groove between the document-feed reading region and the document-fixed reading region, and the lower end of the document pick-up member is disposed in the groove. The groove extends over the transparent board in a widthwise direction perpendicular to the document conveying direction. Further, Japanese Patent Application Publication No. H11-136437 discloses that the transparent board is formed with a plurality of through-holes or recesses between the document-feed reading region and the document-fixed reading region, and a plurality of the pick-up member are provided to the plurality of through-holes or recesses.

### SUMMARY

Forming the groove between the document-feed reading region and the document-fixed reading region, that is better than dividing the transparent board into two parts. However, since strength is reduced, the transparent board may be bent downward. When the plurality of pick-up member is provided on the transparent board, reduction in strength of the transparent board can be suppressed to some extent. However, when the document having a bent corner is conveyed, the bent part of the document comes into contact with a side surface of the document pick-up member and whole of the document cannot be picked up. As a result, the document cannot be conveyed.

In view of the foregoing, it is an object of the present invention to provide an image reading device capable of performing a document-feed reading operation and a document-fixed reading operation by providing a document-feed reading region and a document-fixed reading region on a transparent board, and to provide an image forming device having the image reading device capable of suppressing reduction in strength of a transparent board and picking up a document conveyed on the document-feed reading region in a document conveying direction.

The object is attained by an image reader according to claim 1 and an image forming device according to claim 8. Further developments of the invention are specified in the dependent claims.

### BRIEF DESCRIPTION OF THE DRAWINGS

In the drawings:
Fig. 1 is an perspective view showing configuration of an ink jet recording device according to an embodiment of the present invention;
Fig. 2 is a corss-sectional view showing the ink jet recording device according to the embodiment of the present invention;
Fig. 3 is a perspective view showing a cover unit of the ink jet recording as viewed from the rear side in Fig. 1;
Fig. 4 is a cross-sectional view showing internal configuration of a scanner in the ink jet recording device according to the embodiment of the present invention;
Fig. 5 is an cross-sectional view showing a reading head of the scanner according to the embodiment of the present invention;
Fig. 6A is a rear side view showing a platen glass and a document pick-up member of the scanner according to the embodiment of the present invention;
Fig. 6B is a top view showing the platen glass and the document pick-up member of the scanner according to the embodiment of the present invention;
Fig. 6C is a left side view showing the platen glass and the document pick-up member of the scanner according to the embodiment of the present invention;
Fig. 7A is an enlarged cross-sectional view of a vicinity of a distal end taken along a line VIIA-VIIA in Fig. 6B;
Fig. 7B is an enlarged cross-sectional view of the vicinity of the distal end taken along a line VIIB-VIIB in Fig. 6B;
Fig. 8A is a plan view showing a flat bed unit including the platen glass and the document pick-up member according to the embodiment of the present invention;
Fig. 8B is a perspective view showing the flat bed unit including the platen glass and the document pick-up member according to the embodiment of the present invention;
Fig. 9 is a perspective view showing a cover unit of the ink jet recording as viewed from the rear side according to another embodiment of the present invention;
Fig. 10A is a rear side view showing a platen glass and a document pick-up member of the scanner according to another embodiment of the present invention;
Fig. 10B is a top view showing the platen glass and the document pick-up member of the scanner according to another embodiment of the present invention;
Fig. 10C is a left side view showing the platen glass and the document pick-up member of the scanner according to another embodiment of the present invention;
Fig. 11A is an enlarged cross-sectional view of a vicinity of a distal end taken along the line XIA-XIA in Fig. 10B;
Fig. 11B is an enlarged cross-sectional view of the vicinity of the distal end taken along the line XIB-XIB in Fig. 10B;
Fig. 12A is a plan view showing a flat bed unit including the platen glass and the document pick-up member according to another embodiment of the present invention;
Fig. 12B is a perspective view showing the flat bed unit including the platen glass and the document pick-up member according to another embodiment of the present invention;
Fig. 13A is a rear side view showing a platen glass and a document pick-up member of the scanner according to another embodiment of the present invention;
Fig. 13B is a top view showing the platen glass and the document pick-up member of the scanner according to another embodiment of the present invention;
Fig. 13C is a left side view showing the platen glass and the document pick-up member of the scanner according to another embodiment of the present invention;
Fig. 14A is an enlarged cross-sectional view of a vicinity of a distal end taken along the line XIVA-XIVA in Fig. 13B;
Fig. 14B is an enlarged cross-sectional view of the vicinity of the distal end taken along the line XIVB-XIVB in Fig. 13B;
Fig. 15A is a plan view showing a flat bed unit including the platen glass and the document pick-up member according to another embodiment of the present invention; and
Fig. 15B is a perspective view showing the flat bed unit including the platen glass and the document pick-up member according to another embodiment of the present invention.

### DETAILED DESCRIPTION

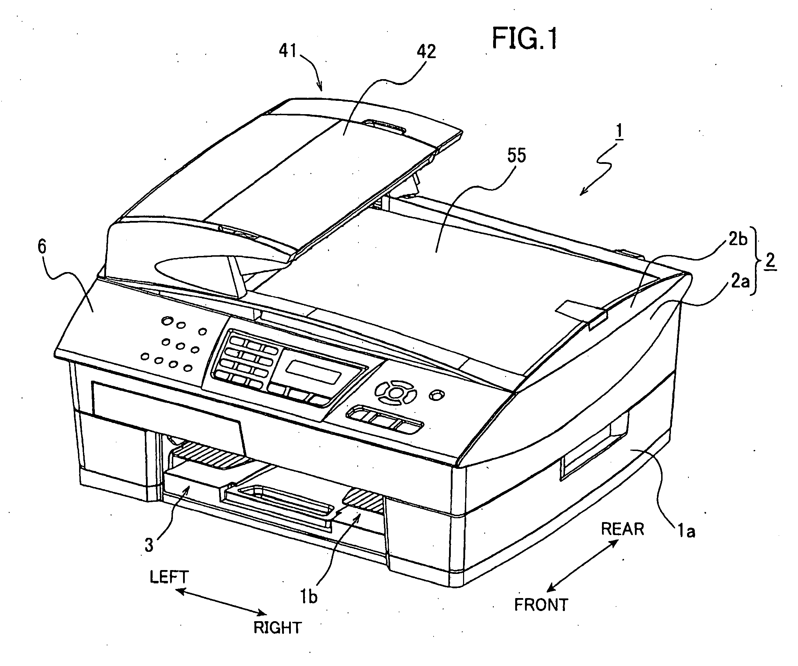

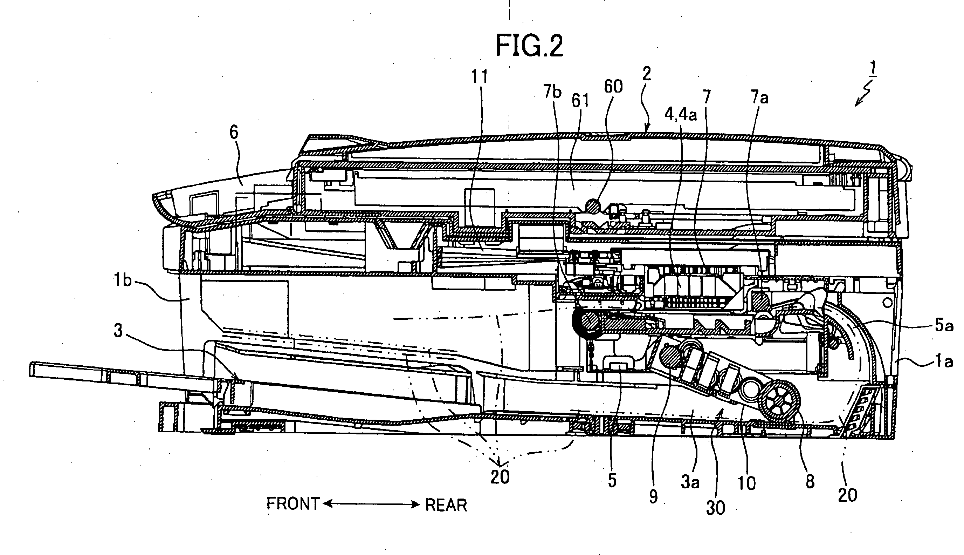

Next, an image scanner and an image forming device according to an embodiment of the present invention will be described while referring to the accompanying drawings. Fig. 1 is a perspective view showing of an ink jet recording device 1 according to the embodiment of the present invention. Fig. 2 is a cross-sectional view of the ink jet recording device 1. A document feeding unit 41 described later is omitted in Fig. 2.

The ink jet recorder 1 is a so-called Multi Function Device (MFD) having printing, copying, scanning and faxing functions. Sheet-like materials made of paper, plastic film and the like are used as recording mediums.

As shown in Figs. 1 and 2, the ink jet recording device 1 has a case 1a, a scanner 2, and a recording unit 7. The scanner 2 is disposed above the case 1a. The recording unit 7 is disposed below the scanner 2 (in an upper section of the case 1a). The recording unit 7 forms an image on a recording sheet 20, which is a recording medium, in above functions. A sheet feeder 30 is provided in a lower section of the case 1a.

### [Configuration of recording unit 7]

A box-like metal frame 5 is disposed above the sheet feeder 30 and in a rear section of the case 1a. The frame 5 is a rectangular parallelepiped shape that is long in the left-to-right direction and that is short in the front-to-rear direction, and fixed in the case 1a.

The recording unit 7 is disposed in an upper section of the frame 5. The recording unit 7 includes a carriage 4a which mounts a recording head 4 that performs printing operation on the recording sheet 20, and another mechanism. The carriage 4a can move reciprocally in the left-to-light direction (a scanning direction). In the recording unit 7, the carriage 4a reciprocates in the left-to-light direction in Fig. 1 (in a vertical direction with respect to the sheet of Fig. 2), thereby performing scanning movement of the recording head 4. During this scanning movement, the recording head 4 emits ink from a nozzle to record an image on the recording sheet 20 disposed below the recording head 4.

A maintenance unit (not shown) is mounted at a position corresponding to a waiting position of the carriage 4a in the recording unit 7. In the maintenance unit, various maintenance operations, such as a wiping operation for wiping a nozzle surface of the recording head 4 by a blade or the like, a purge operation for forcibly removing contaminant, air and solidified ink from the nozzle and a flushing operation, are carried out.

Four ink cartridges (not shown) are disposed in the front section of the case 1a. The four ink cartridges store four colors (black, cyan, magenta, and yellow) of ink for forming a full-color image on the recording sheet 20, respectively. These ink cartridges are detachably disposed in the case 1a. When ink in the ink cartridges is empty, the ink cartridges are replaced.

The ink stored in each ink cartridge is supplied to the recording head 4 through four ink supply tubes 11 connecting the ink cartridges to the recording head 4. The ink supply tubes 11 are supported so as to move following the reciprocating movement of the carriage 4a.

A conveying path 5a for guiding the recording sheet 20 from the rear side of the sheet feeder 30 to the recording unit 7 is formed in the rear side of the frame 5. The recording unit 7 has a conveying roller 7a and an ejecting roller 7b. The conveying roller 7a is located at a position adjacent to an exit of the conveying path 5a. The ejecting roller 7b is located at a position where the recording sheet 20 that an image is recorded thereon is emitted from the recording unit 7. The conveying roller 7a is rotated by a rotational driving force of a sheet conveying motor (not shown).

A long arm 10 is disposed rear and bottom section of the case 1a. The arm is pivotably supported about a driving shaft 9. A sheet feed roller 8 is rotatably supported on the rear end of the arm 10.. When the driving shaft 9 is rotated by a rotational driving force of a sheet feeding motor (not shown), the rotational driving force is transmitted to the sheet feeding roller 8, thereby rotating the sheet feeding roller 8.

The sheet feeder 30 has a sheet feeding cassette 3 which is inserted from an opening 1b of the case 1a. The sheet feeding cassette 3 is provided with a sheet storage unit 3a for storing stacked recording sheets 20 therein. When the sheet feeding cassette 3 is inserted into the case 1a, the recording sheets 20 in the sheet storage unit 3a are located in the rear section of the case 1a.

The topmost sheet of the recording sheets 20 stacked in the sheet storage unit 3a is sent to the recording unit 7 through the conveying path 5a by rotation of a sheet feeding roller 8.

An operation panel 6 including various operation buttons and a liquid crystal panel is provided on the upper front surface of the ink jet recording device 1. By using the operation panel 6, the user can select any of a printing mode, a copying mode, a scanning mode and a faxing mode in the ink jet recording device 1, set various setting items in the modes, input necessary information such as a facsimile number and the like, and confirm operating state, communications history and the like.

### [Configuration of scanner 2]

The scanner 2 can perform reading according to both the flat bed (FB) method and automatic document feeding (ADF) method. As shown in Fig. 1, the scanner 2 includes a cover unit 2b, which has a clamshell configuration, provided on a flat bed unit 2a integral with the operation panel 6. The cover unit 2b is capable of opening and closing over the flat bed unit 2a. The document feeding unit 41 is provided at the left section of the cover unit 2b so as to protrude upward from the cover unit 2b. A document feeding tray 42 is provided on the upper section of the document feeding unit 41. The document feeding tray 42 is capable rotating about a right end of the document feeding unit 41.

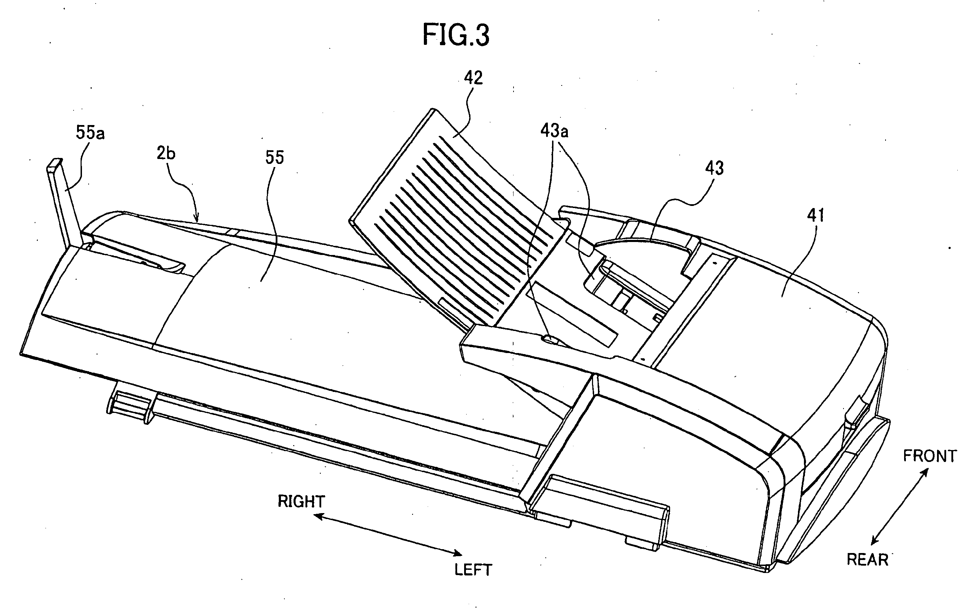

Fig. 3 is a perspective view showing the cover unit 2b as viewed from the rear side in Fig. 1. As shown in Fig. 3, the document feeding tray 42 can be opened. When the document feeding tray 42 is opened, a pair of document guides 43 (only one is shown in Fig. 3) is exposed. The pair of document guides 43 are coupled to each other by a link (not shown) and move along document guide grooves 43a symmetrically about a center of the document feeding unit 41 in a direction (hereinafter referred to as the widthwise direction) perpendicular to a document conveying direction of the document feeding tray 42. That is, the pair of document guides 43 move toward and away from each other in the widthwise direction for adjusting both a distance therebetween.

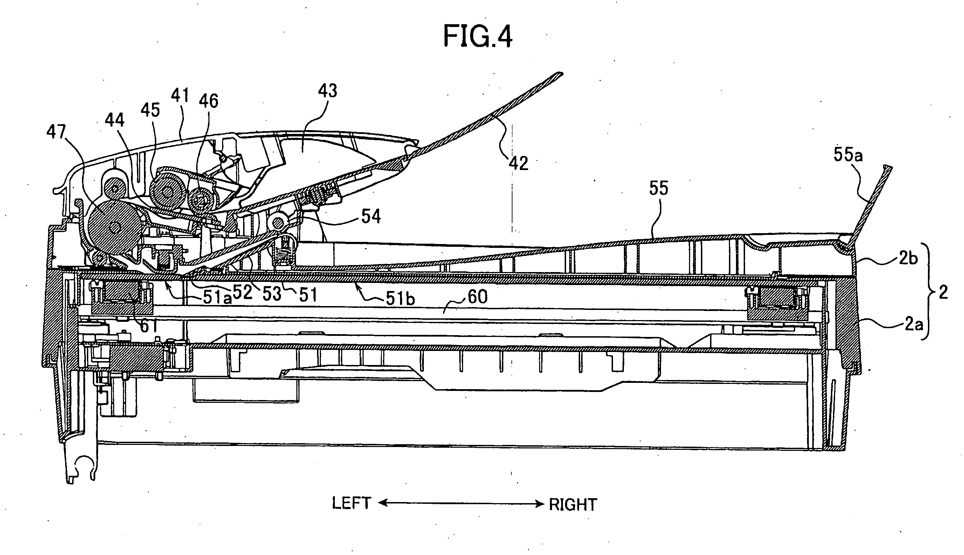

Fig. 4 is a cross-sectional view showing an internal configuration of the scanner 2. As shown in Fig. 4, the document feeding unit 41 has a separating pad 44, a separating roller 45, a preliminary feeding roller 46, and a document feeding roller 47. The separating roller 45 is disposed above and in confrontation with separating pad 44. The separating roller 45 pinches a document with the separating pad 44 and separates the documents stacked on the document feeding tray 42 one sheet at a time. The preliminary feeding roller 46 is disposed right side of the separating roller 4.5. The preliminary feeding roller 46 conveys a front end of the document disposed between the pair of document guides 43 to between the separating pad 44 and the separating roller 45. The document feeder 47 is provided at a downstream side of the separating roller 45 in the document conveying direction. The document feeder 47 conveys the document on a platen glass 51 described later while changing a conveying direction of the document by 180 degrees. Thus, the document disposed on the document feeding tray 42 opened as described above is separated one by one by the preliminary feeding roller 46 and the separating roller 45 and then sent to the document feeding roller 47.

The cover unit 2b includes a document pick-up member 52, a guide 53, a document ejecting roller 54, and a document ejecting tray 55. The document pick-up member 52 is disposed the downstream side of the document feeder 47 in the document conveying direction. The guide 53 slants upward from the left side toward the right side. A left end of the guide 53 is located adjacent to the document pick-up member 52. The document ejecting roller 54 is disposed adjacent to a right end of the guide 53. The document ejecting tray 55 is positioned at an upper surface of the cover unit 2b. The document ejecting tray 55 has a document receiver 55a provided at the right end of the document ejecting tray 55. The document receiver 55a prevents the document from falling off the document ejecting tray 55.

The document is conveyed on the document-feed reading region 51a described later of the platen glass 51 by the document feeding roller 47 and further conveyed to the sheet ejecting roller 54 via the document pick-up member 52 and the guide 53. The conveyed document is further conveyed by the sheet ejecting roller 54 and ejected to the document ejecting tray 55.

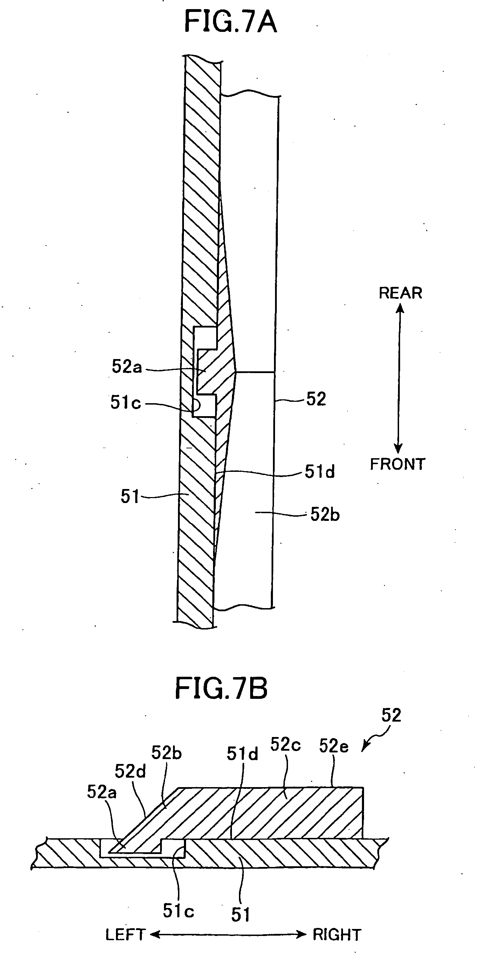

The platen glass 51 includes the document-feed reading region 51a and a document-fixed reading region 51b. In the document-feed reading region 51a, the document is read by the document feeding unit 41 and a reading head 61 described later according to the automatic document feeding method. In the document-fixed reading region 51b, the document is scanned according to the flat bed method. As shown in Figs. 7A and 7B, the platen glass 51 is formed with a recess 51c. The recess 51c is formed between the document-feed reading region 51a and the document-fixed reading region 51b and at the center of the platen glass 51 in the widthwise direction. The recess 51c is shaped like a cylinder with a constant depth.

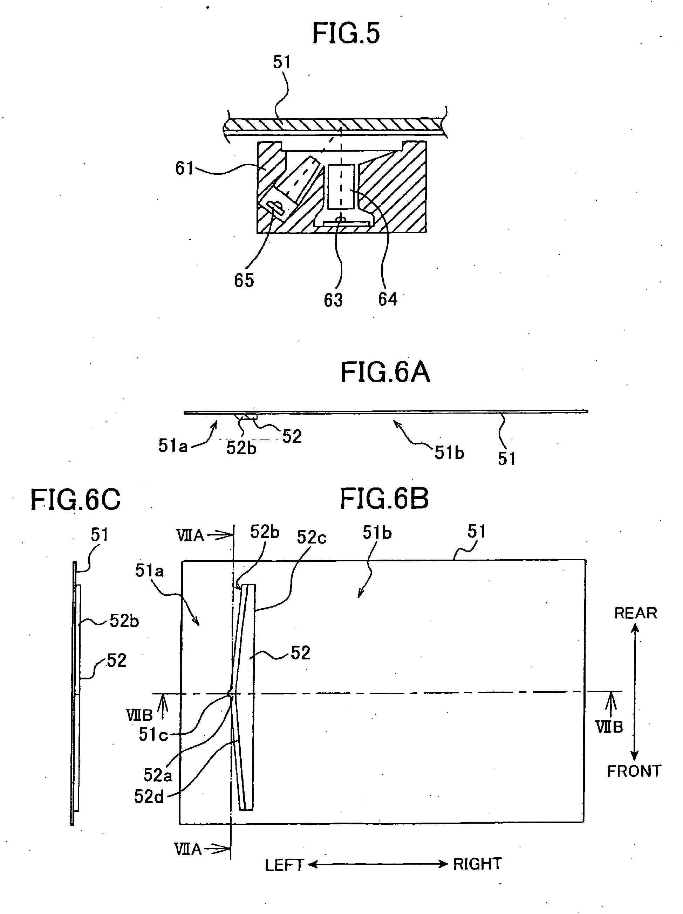

As shown in Fig. 4, the document pick-up member 52 is provided between the document-feed reading region 51a and the document-fixed reading region 51b. Furthermore, the reading head 61 is located under the platen glass 51. The reading head 61 can move over the document-feed reading region 51a and the document-fixed reading region 51b along a guide 60. As shown in Fig. 5, the reading head 61 has an image device 63, a selfoc lens 64 and a light source 65. The reading head 61 is configured so that the light source 65 irradiates light to the document on the platen glass 51, the selfoc lens 64 receives reflected light from the document and forms an image on the image device 63, and image device 63 scans the image.

### [Configuration and effects of document pick-up member]

Figs. 6A through 6C are three sides view showing configuration of the platen glass 51 and the document pick-up member 52. Figs. 6A through 6C shows a rear side view, a top view and a left side view of the platen glass 51 and the document pick-up member 52, respectively. Fig. 7A is an enlarged cross-sectional view of a vicinity of a distal end 52a described later taken along a line VIIA-VIIA in Fig. 6B.. Fig. 7B is an enlarged cross-sectional view of a vicinity of the distal end 52a taken along a line VIIB-VIIB in Fig. 6B.

The document pick-up member 52 has a left end portion 52b, and a right end portion 52c. The left end portion 52b has the distal end 52a at a most upstream end of the left end portion 52b. The distal end 52a is located at the center of the document pick-up member 52 in the widthwise direction. As shown in Figs. 7A, and 7B, the distal end 52a is located in the recess 51c. That is, the distal end 52a is located below an upper surface 51d of the platen glass 51. The left end portion 52b of the document pick-up member 52 is inclined with respect to the widthwise direction from the distal end 52a toward the right side (the downstream side in the document conveying direction). The left end portion 52b is inclined symmetrically about the distal end 52a in the widthwise direction.

Furthermore, as shown in Fig. 7B, the left end portion 52b have a tapered face 52d slanting upward from the left side toward the right side. That is, the tapered face 52d slants gradually upwardly toward the downstream side in the document conveying direction. The left portion of the tapered face 52d is located inside the recess 51c and below the upper surface 51d of the platen glass 51. The right end portion 52c of the document pick-up member 52 has a rectangular surface which is parallel to the widthwise direction and perpendicular to the platen glass 51, and a top surface 52e which is parallel to the upper surface 51d of the platen glass 51.

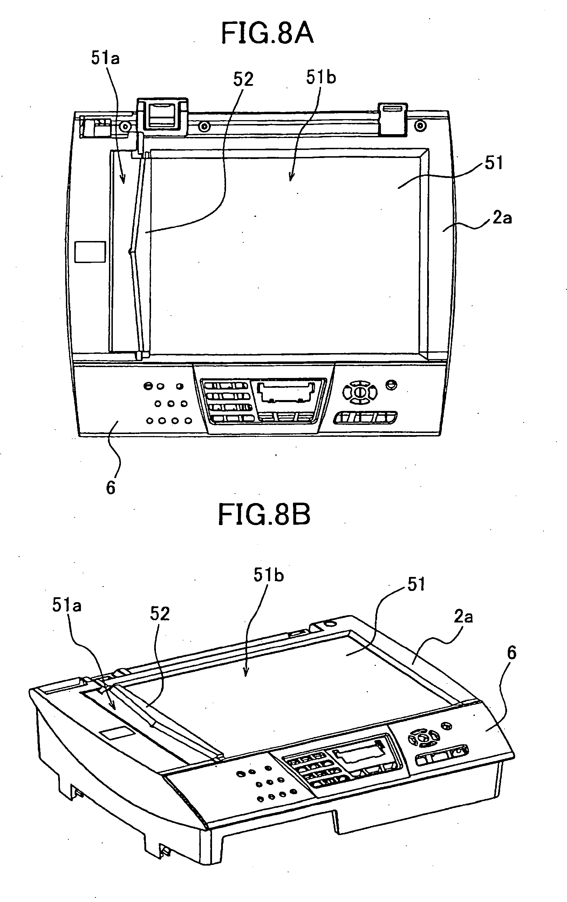

Refer to Figs. 8A and 8B as a plan view and a perspective view, respectively, of the flat bed unit 2a including the platen glass 51 and the document pick-up member 52 in the state that the cover unit 2b is removed.

In the cover unit 2b of the scanner 2, a document conveyed on the document-feed reading region 51a by the document feeding roller 47 as described above can be well picked up by the document pick-up member 52 as follows. That is, since the left end portion 52b is inclined with respect to the widthwise direction from the distal end 52a toward the right side and is inclined symmetrically about the distal end 52a in the widthwise direction, even when the document conveyed on the document-feed reading region 51a by the document feeding roller 47 is conveyed tilting a little with respect to a direction from the document-feed reading region to the document-fixed reading direction or has a bent corner, the document first comes into contact with the distal end 52a. As described above, since the distal end 52a is located below the upper surface 51d of the platen glass 51 and the left side of the tapered face 52d is located inside the recess 51c, the document can be picked up without being caught on the document pick-up member 52.

Then, whole of the document is picked up along the tapered face 52d and the top surface 52e of the right end portion 52c. Furthermore, since the top surface 52e of the right end portion 52c is parallel to the upper surface 51d of the platen glass 51, the leading edge of the picked up document is also parallel to the upper surface 51d of the platen glass 51. Accordingly, the document can be smoothly guided to the guide 53 and document ejecting roller 54.

In the preferred embodiment, since the platen glass 51 is formed with the recess 51c, the document pick-up member 52 having the distal end 52a can be attached as described above. It is unnecessary to divide the platen glass 51 into two parts or form a groove extending over the platen glass 51 in the widthwise direction. Thus, strength of the platen glass 51 can be ensured and production cost of the platen glass 51 can be reduced. Accordingly, even when a book or the like is pressed against the document-fixed reading region 51b, the reading head 61 can be smoothly moved. The recess 51c is formed in the platen glass 51 in the preferred embodiment described above, but a though hole may be formed in the platen glass 51.

While the invention has been described in detail with reference to specific embodiments thereof, it would be apparent to those skilled in the art that many modifications and variations may be made therein without departing from the scope of the attached claims.

While the distal end 52a is located at the center of the document pick-up member 52 in the widthwise direction in the preferred embodiment described above, for example, the distal end 52a may be provided on the document pick-up member 52 within a region corresponding to a minimum width of a document which is capable of being guided by the document guides 43 (preferably, any position other than the both ends of the minimum-width document in the widthwise direction). The minimum width of the document is a distance that the pair of document guide 43 move toward most each other. In this configuration, various documents can be well picked up as described above. Since the distal end 52a is located into the recess 51c, a position of the recess 51c is also determined by determining the position of the distal end 52a. Accordingly, it is preferable that the recess 51c is also disposed within a range corresponding to the minimum width of the document which is capable of being guided by the document guides 43 (preferably, any position other than the both ends of the minimum-width document in the widthwise direction).

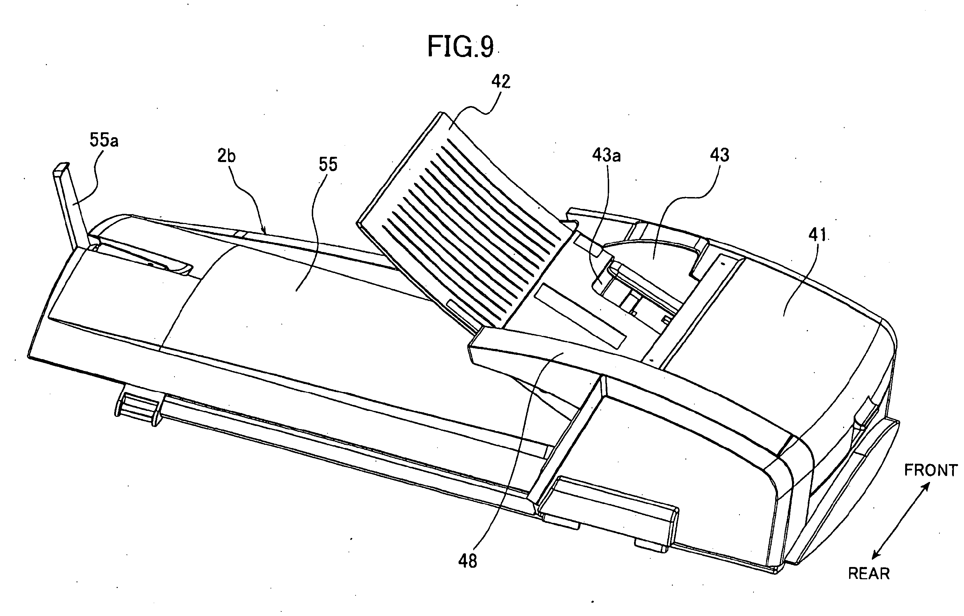

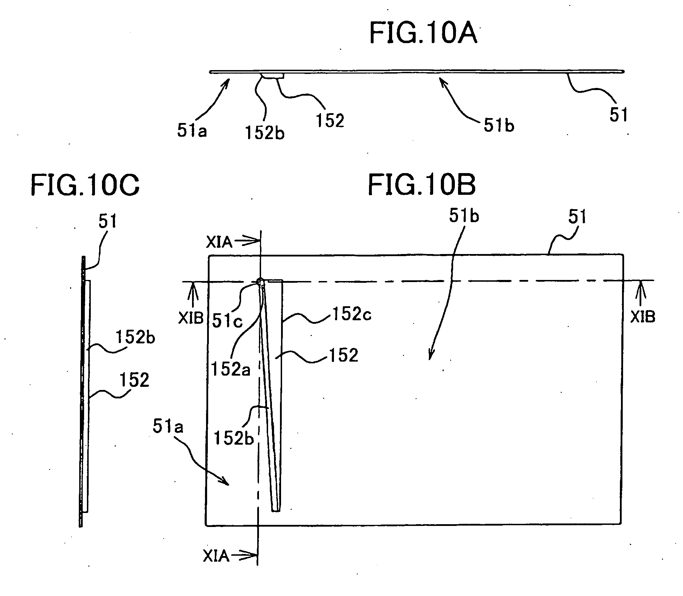

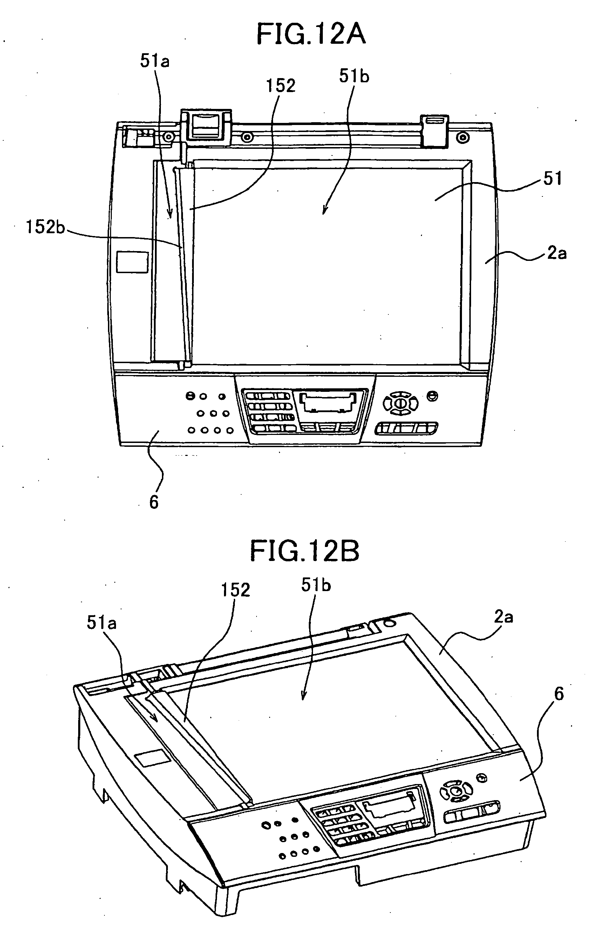

While the pair of the document guides 43 is provided on the document feeding unit 41 in the preferred embodiment described above, as shown in Fig. 9, only one document guide 43 moving along the document guide groove 43a may be provided on the document feeding unit 41. A document passes between the document guide 43 and a rear side wall 48 of the document feeding unit 41. In this case, as shown in Figs. 10A through 12B, a distal end 152a may be located on the rear side of a document pick-up member 152 corresponding to the rear side wall 48 side of the document feeding unit 41 (a side where the document guide 43 does not provided). The distal end 152a and the document pick-up member 152 correspond to the distal end 52a and the document pick-up member 52 in the preferred embodiment described above. Since the rear edge of the document constantly passes the rear side wall 48 side of the document feeding unit 41 and the distal end 152a is located at the rear side of the document pick-up member 152, similar effects as those in the preferred embodiment described above can be obtained. As shown in Figs. 10A through 12B, in this case, a left end portion 152b extends in a straight line and is inclined with respect to the widthwise direction. The left end portion 152b corresponds to the left end portion 52b in the preferred embodiment described above.

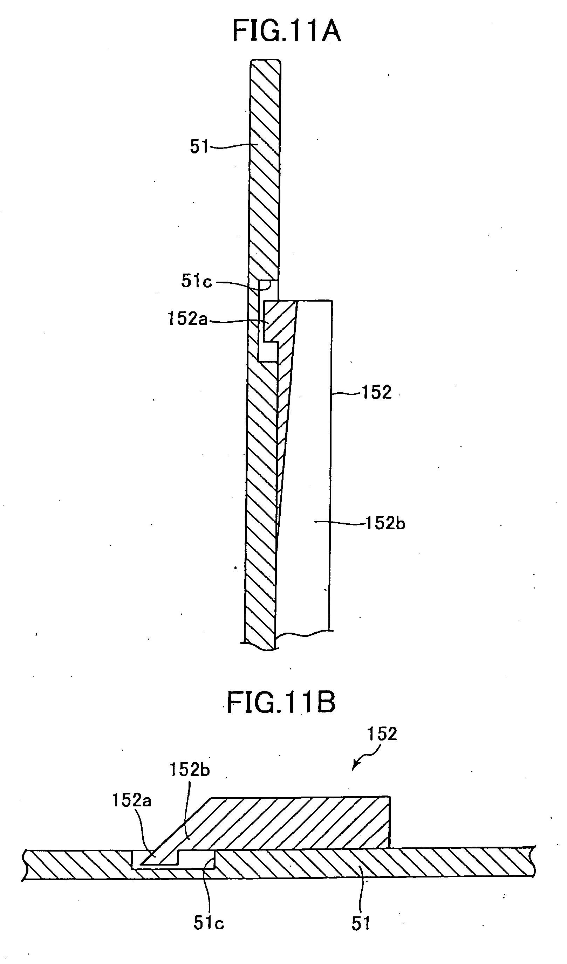

Fig. 10A to Fig. 12B correspond to Fig. 6A to Fig. 8B in the preferred embodiment described above, respectively. Figs. 10A through 10C shows a rear side view, a top view and a left side view of the platen glass 51 and the document pick-up member 152, respectively. Fig. 11A is an enlarged cross-sectional view of a vicinity of the distal end 152a taken along the line XIA-XIA in Fig. 10B. Fig. 11B is an enlarged cross-sectional view of a vicinity of the distal end 152a taken along the line XIB-XIB in Fig. 10B. Figs. 12A and 12B as a plan view and a perspective view, respectively, of the flat bed unit 2a including the platen glass 51 and the document pick-up member 152 in the state that the cover unit 2b is removed.

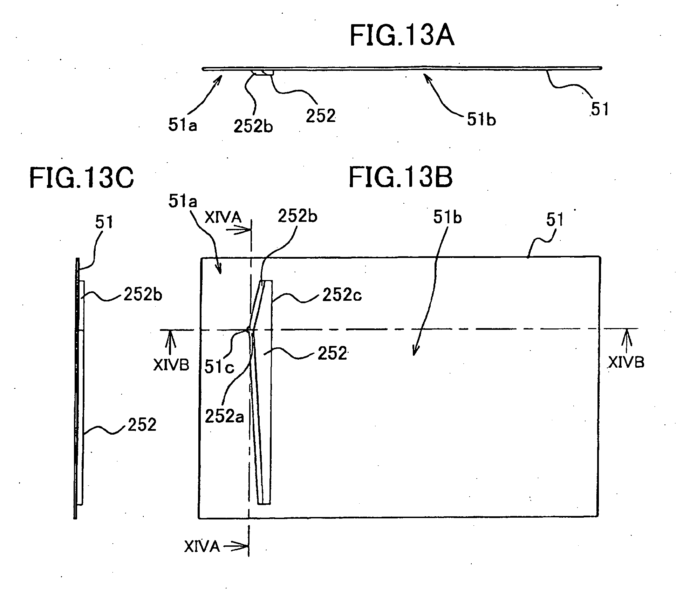

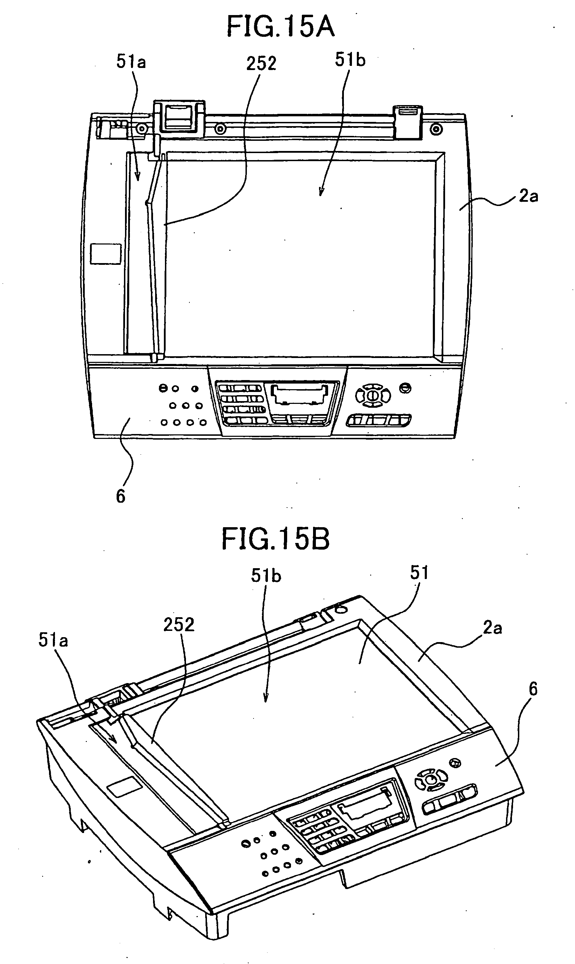

While the distal end 52a is provided on the document pick-up member 52 at the center in the widthwise direction in the preferred embodiment described above, as shown in Figs. 13A through 15B, a distal end 252a may be located on a document pick-up member 252 at a position corresponding to any position other than both ends of the minimum-width document in the widthwise direction (preferably, in a vicinity of the center of the minimum-width document in the widthwise direction). The distal end 252a and the document pick-up member 252 correspond to the distal end 52a and the document pick-up member 52 in the preferred embodiment described above.

In this case, as compared with the case where the distal end 152a is located at the rear side of the document pick-up member 152 as described above, a document conveyed on the document-feed reading region 51a can be well picked up by the document pick-up member 252, even when the document conveyed on the document-feed reading region 51a by the document feeding roller 47 is conveyed tilting a little with respect to the direction from the document-feed reading region to the document-fixed reading direction or has a bent corner.

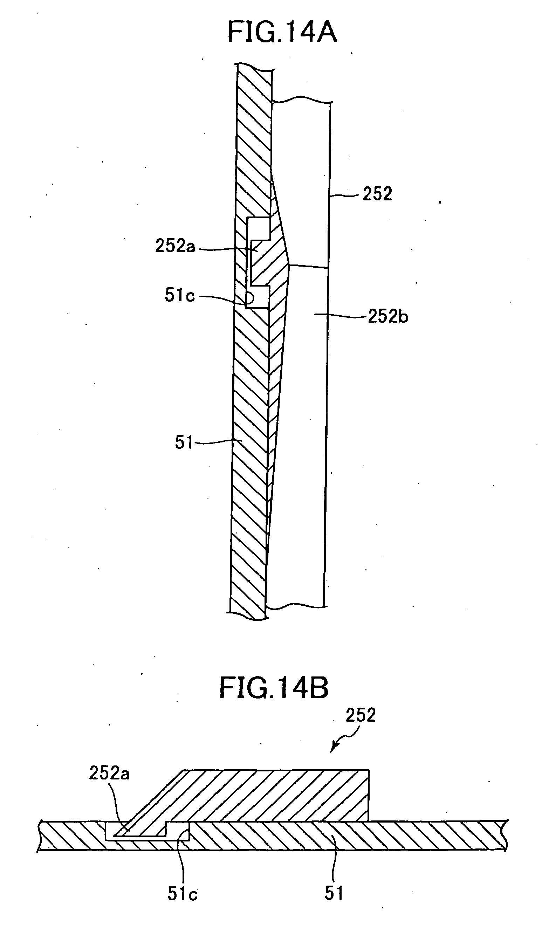

Fig. 13A to Fig. 15B correspond to Fig. 6A to Fig. 8B in the preferred embodiment described above, respectively. Figs. 13A through 13C shows a rear side view, a top view and a left side view of the platen glass 51 and the document pick-up member 252, respectively. Fig. 14A is an enlarged cross-sectional view of a vicinity of the distal end 252a taken along the line XIVA-XIVA in Fig. 13B. Fig. 14B is an enlarged cross-sectional view of a vicinity of the distal end 252a taken along the line XIVB-XIVB in Fig. 13B. Figs. 15A and 15B as a plan view and a perspective view, respectively, of the flat bed unit 2a including the platen glass 51 and the document pick-up member 252 in the state that the cover unit 2b is removed.

In the above embodiments, the present invention is applied to the multi function device having the copying function of forming an image by the recording unit 7 based on the image of the document read by the scanner 2. However, the present invention can be also applied to a scanner without the image forming unit.

## Claims

1. An image reading device comprising:
a transparent board (51) that has a document-feed reading region (51a) for conveying a document thereon and a document-fixed reading region (51b) for fixedly placing a document thereon, the transparent board (51) having an upper surface (51d) and one of a recess (51c) and a through-hole formed therein between the document-feed reading region (51a) and the document-fixed reading region (51b);
a document conveying unit (47) adapted to convey the document on the document-feed reading region (51a) in a document conveying direction from the document-feed reading region (51a) to the document-fixed reading region (51b), a widthwise direction being defined perpendicular to the document conveying direction; and
a document pick-up member (52; 152; 252)provided between the document-feed reading region (51a) and the document-fixed reading region (51b) to pick up the document conveyed on the document-feed reading region (51a) upward from the upper surface of the transparent board (51);
wherein the document pick-up member (52; 152; 252) has an one end portion (52b; 152b; 252b) that is located on a document-feed reading region side thereof, the one end portion (52b; 152b; 252b) having a distal end (52a; 152a; 252a) positioned at an upstream end of the one end portion (52b; 152b; 252b) in the document conveying direction, the distal end (52a; 152a; 252a) being located in the one of the recess (51c) and the through-hole, **characterized in that**
the one end portion (52b; 152b; 252b) is inclined with respect to the widthwise direction from the distal end (52a; 152a; 252a) toward the downstream side in the document conveying direction.

2. The image reading device according to claim 1, wherein the one of the recess (51c) and the through-hole is formed on the transparent board (51) within a region corresponding to a minimum width of a document, which is capable of conveying by the document conveying unit (47), in the widthwise direction.

3. The image reading device according to claim 2, wherein the one of the recess (51c) and the through-hole is formed on the transparent board (51) at a position corresponding to any position other than both ends of the minimum-width document in the widthwise direction.

4. The image reading device according to claim 1, wherein the distal end (52a; 152a; 252a) is positioned within a region corresponding to a minimum width of a document, which is capable of conveying by the document conveying unit (47), in the widthwise direction.

5. The image reading device according to claim 4, wherein the distal end (52a; 152a; 252a) is positioned at a position corresponding to any position other than both ends of the minimum-width document in the widthwise direction.

6. The image reading device according to claim 1, wherein the document pick-up member (52; 152; 252) further includes another end portion (52c; 152c; 252c) that is located on a document-fixed reading region side thereof, the another end portion (52c; 152c; 252c) having a upper surface (52e) parallel to the upper surface (51d) of the transparent board (51).

7. The image reading device according to claim 1, wherein the one end portion (52b; 152b; 252b) has an end face inclined upwardly toward the document-fixed reading region (51b).

8. An image forming device comprising:
an image reading device according to one of claims 1 to 7, wherein the image reading device is adapted to read a document and to generate image data; and
an image forming unit adapted to form an image on a recording medium based on the image data.

## Patentansprüche

1. Bildlesevorrichtung, aufweisend:
eine transparente Platte (51), die einen Zuführ-Dokumentenlesebereich (51a) zum Transportieren eines Dokuments auf demselben und einen stationären Dokumentenlesebereich (51b) zum stationären Anordnen eines Dokuments darauf aufweist, wobei die transparente Platte (51) eine Oberseite (51d) und entweder eine Ausnehmung(51c) oder ein darin ausgebildetes Durchgangsloch zwischen dem Zuführ-Dokumentenlesebereich (51a) und dem stationären Dokumentenlesebereich (51b) aufweist;
eine Dokumententransporteinheit (47), die in der Lage ist, das Dokument auf dem Zuführ-Dokumentenlesebereich (51a) in einer Dokumententransportrichtung von dem Zuführ-Dokumcntenlescbereich (51a) zu dem stationären Dokumentenlesebereich (51b) zu transportieren, wobei eine Breitenrichtung im rechten Winkel zu der Dokumententransportrichtung definiert ist; und
ein Dokumentenaufnahmeelement (52; 152; 252), das zwischen dem Zuführ-Dokumentenlesebereich (51a) und dem stationären Dokumentenlesebereich (51b) angeordnet ist, um das auf dem Zuführ-Dokumentenlesebereich (51a) transportierte Dokument von der Oberseite der transparenten Platte (51) in Aufwärtsrichtung aufzunehmen;
wobei das Dokumentenaufnahmeelement (52; 152; 252) einen Endbereich (52b; 152b; 252b) aufweist, der auf einer Seite des Zuführ-Dokumentenlesebereichs davon angeordnet ist, wobei der eine Endbereich (52b; 152b; 252b) ein distales Ende (52a; 152a; 252a) aufweist, das an einem Ende stromaufwärts von dem einen Endbereich (52b; 152b; 252b ) in der Dokumententransportrichtung angeordnet ist, wobei das distale Ende (52a; 152a; 252a) entweder in der Ausnehmung (51c) oder in dem Durchgangsloch angeordnet ist, **dadurch gekennzeichnet, dass**
der eine Endbereich (52b; 152b; 252b) in Bezug auf die Breitenrichtung von dem distalen Ende (52a; 152a; 252a) in Richtung der stromabwärtigen Seite in der Dokumententransportrichtung geneigt ausgebildet ist.

2. Bildlesevorrichtung nach Anspruch 1, wobei entweder die Ausnehmung (51c) oder das Durchgangsloch auf der transparenten Platte (51) innerhalb eines Bereichs ausgebildet ist, der in der Breitenrichtung einer minimalen Breite eines Dokuments entspricht, das durch die Dokumententransporteinheit (47) transportiert werden kann.

3. Bildlesevorrichtung nach Anspruch 2, wobei entweder die Ausnehmung (51c) oder das Durchgangsloch auf der transparenten Platte (51) an einer Position ausgebildet ist, die irgendeiner anderen Position als den beiden Enden des eine minimale Breite aufweisenden Dokuments in der Breitenrichtung entspricht.

4. Bildlesevorrichtung nach Anspruch 1, wobei das distale Ende (52a; 152a; 252a) innerhalb eines Bereichs positioniert ist, der in der Breitenrichtung einer minimalen Breite eines Dokuments entspricht, das in der Lage ist, durch die Dokumententransporteinheit (47) transportiert zu werden.

5. Bildlesevorrichtung nach Anspruch 4, wobei das distale Ende (52a; 152a; 252a) an einer Position positioniert ist, die mit jeder Position außer den beiden Enden des eine minimale Breite aufweisenden Dokuments in der Breitenrichtung korrespondiert.

6. Bildlesevorrichtung nach Anspruch 1, wobei das Dokumentenaufnahmeelement (52; 152; 252) ferner einen weiteren Endbereich (52c; 152c; 252c) beinhaltet, der auf einer Seite des stationären Dokumentenlesebereichs desselben angeordnet ist, wobei der andere Endbereich (52c; 152c; 252c) eine Oberseite (52e) parallel zu der Oberseite (51d) der transparenten Platte (51) aufweist.

7. Bildlesevorrichtung nach Anspruch 1, wobei der eine Endbereich (52b; 152b; 252b) eine Endfläche aufweist, die in Richtung des stationären Dokumentenlesebereichs (51b) nach oben geneigt ist.

8. Bilderzeugungsvorrichtung, aufweisend:
eine Bildlesevorrichtung nach einem der Ansprüche 1 bis 7, wobei die Bildlesevorrichtung in der Lage ist, ein Dokument zu lesen und Bilddaten zu erzeugen; und
eine Bilderzeugungseinheit, die in der Lage ist, ein Bild auf einem Aufzeichnungsmedium basierend auf den Bilddaten zu erzeugen.

## Revendications

1. Dispositif de lecture d'image comprenant :
un panneau transparent (51) qui a une région de lecture d'alimentation de document (51a) pour transporter un document sur celle-ci et une région de lecture fixe de document (51b) pour placer de manière fixe un document sur celle-ci, le panneau transparent (51) ayant une surface supérieure (51d) et l'un parmi un évidement (51c) et un trou de passage formé dans celle-ci, entre la région de lecture d'alimentation de document (51a) et la région de lecture fixe de document (51b) ;
une unité de transport de document (47) adaptée pour transporter le document sur la région de lecture d'alimentation de document (51a) dans une direction de transport de document à partir de la région de lecture d'alimentation de document (51a) jusqu'à la région de lecture fixe de document (51b), une direction dans le sens de la largeur étant définie perpendiculairement à la direction de transport de document ; et
un élément de prélèvement de document (52 ; 152 ; 252) prévu entre la région de lecture d'alimentation de document (51a) et la région de lecture fixe de document (51b) pour prélever le document transporté sur la région de lecture d'alimentation de document (51a) vers le haut à partir de la surface supérieure du panneau transparent (51) ;
dans lequel l'élément de prélèvement de document (52 ; 152 ; 252) a une partie d'extrémité (52b ; 152b ; 252b) qui est placée de son côté de région de lecture d'alimentation de document, la partie d'extrémité (52b ; 152b ; 252b) ayant une extrémité distale (52a ; 152a ; 252a) positionnée au niveau d'une extrémité en amont de la partie d'extrémité (52b ; 152b ; 252b) dans la direction de transport du document, l'extrémité distale (52a ; 152a ; 252a) étant positionnée dans l'un parmi l'évidement (51c) et le trou de passage, **caractérisé en ce que** :
la partie d'extrémité (52b ; 152b ; 252b) est inclinée par rapport à la direction dans le sens de la largeur à partir de l'extrémité distale (52a ; 152a ; 252a) vers le côté en aval dans la direction de transport de document.

2. Dispositif de lecture d'image selon la revendication 1, dans lequel l'un parmi l'évidement (51c) et le trou de passage, est formé sur le panneau transparent (51) à l'intérieur d'une région correspondant à une largeur minimum d'un document, qui peut être transporté par l'unité de transport de document (47), dans le sens de la largeur.

3. Dispositif de lecture d'image selon la revendication 2, dans lequel l'un parmi l'évidement (51c) et le trou de passage, est formé sur le panneau transparent (51) dans une position correspondant à n'importe quelle position différente des deux extrémités du document de largeur minimum dans le sens de la largeur.

4. Dispositif de lecture d'image selon la revendication 1, dans lequel l'extrémité distale (52a ; 152a ; 252a) est positionnée à l'intérieur d'une région correspondant à une largeur minimum d'un document, qui peut être transporté par l'unité de transport de document (47) dans le sens de la largeur.

5. Dispositif de lecture d'image selon la revendication 4, dans lequel l'extrémité distale (52a ; 152a ; 252a) est positionnée dans une position correspondant à n'importe quelle position différente des deux extrémités du document de largeur minimum dans le sens de la largeur.

6. Dispositif de lecture d'image selon la revendication 1, dans lequel l'élément de prélèvement de document (52 ; 152 ; 252) comprend en outre une autre partie d'extrémité (52c ; 152c ; 252c) qui est positionnée sur son côté de région de lecture de document fixe, l'autre partie d'extrémité (52c ; 152c ; 252c) ayant une surface supérieure (52e) parallèle à la surface supérieure (51d) du panneau transparent (51).

7. Dispositif de lecture d'image selon la revendication 1, dans lequel la partie d'extrémité (52b ; 152b ; 252b) a une face d'extrémité inclinée vers le haut vers la région de lecture fixe de document (51b).

8. Dispositif de formation d'image comprenant :
un dispositif de lecture d'image selon l'une quelconque des revendications 1 à 7, dans lequel le dispositif de lecture d'image est adapté pour lire un document et générer des données d'image ; et
une unité de formation d'image adaptée pour former une image sur un support d'enregistrement en fonction des données d'image.
